# EUROPEAN PATENT APPLICATION

(11) **EP 3 182 650 A1**
(43) Date of publication of application: **21.06.2017**
(21) Application number: 16184542.5
(22) Date of filing: 17.08.2016
(51) Int. Cl.: H04L 12/26, H04W 4/00, H04W 88/02

(54) **METHOD AND APPARATUS FOR TRAFFIC MONITORING**

(30) Priority: 18.12.2015 CN 201510958973
(71) Applicant: Xiaomi Inc., Beijing 100085 (CN)
(72) Inventor: WEI, Zhaodong, Haidian District, Beijing 100085 (CN); WANG, Bin, Haidian District, Beijing 100085 (CN); TIAN, Hao, Haidian District, Beijing 100085 (CN)
(74) Representative: Loustalan, Paul William

(57) **Abstract**

Method and apparatus for traffic monitoring are provided in the disclosure. The method may include: receiving (101) a traffic monitoring command to get an amount of network traffic consumed by a background application, wherein the background application is an application program running in background; and outputting (102) the amount of network traffic consumed by each background application.

## Description

### FIELD

The present disclosure generally relates to communication technology, and more particularly to method and apparatus for traffic monitoring.

### BACKGROUND

With the development of the information era and the booming of the mobile Internet industry, network applications have penetrate into every corner of society and the popularity of intelligent terminal devices has brought a lot of convenience to human life. Along with the arrival of the 3G and 4G era, the installation and operation of a variety of applications are costing more and more network traffic. Currently, intelligent terminal devices are provided with a module for monitoring network traffic, for example, to check the amount of network traffic consumption of each application by setting up the configurations for the application and selecting appropriate network data options. However, checking the network traffic consumption in this manner is complicated in operation, and at the same time is time consuming, since the network traffic consumption of all applications is recorded and it needs to locate a target application from all applications.

### SUMMARY

In view of the deficiency in related arts, method and apparatus for traffic monitoring are provided in the disclosure.

According to a first aspect of the present disclosure, a method for network traffic monitoring is provided, including: receiving a traffic monitoring command to get an amount of network traffic consumed by a background application, wherein the background application is an application program running in background; and outputting a correspondence relationship between an application identifier of the background application and the amount of network traffic corresponding to the background application.

Alternatively, the traffic monitoring command is a command for starting a task menu, wherein the task menu is a menu showing an application identifier of a background application, and wherein outputting the correspondence relationship between the application identifier of the background application and the amount of network traffic corresponding to the background application may include: outputting, on the task menu, the correspondence relationship between the application identifier of the background application and the amount of network traffic corresponding to the background application.

Alternatively, outputting the correspondence relationship between the application identifier of the background application and the amount of network traffic corresponding to the background application may include: selecting, from a plurality of amounts of network traffic for a plurality of background applications, a maximum amount of network traffic; calculating a ratio of each amount of network traffic consumed by respective background applications to the maximum amount of network traffic in order to acquire a first ratio corresponding to each of the background applications; and outputting a first correspondence relationship between the application identifier of each background application and the first ratio corresponding to the background application.

Alternatively, outputting the first correspondence relationship between the application identifier of each background application and the first ratio corresponding to the background application may include: displaying the application identifier of each background application and the first ratio corresponding to the background application, the first ratio being displayed at a position associated with the application identifier; or generating a traffic ratio bar diagram for each background application based on the first ratio corresponding to the background application, and displaying the application identifier of the background application and the traffic ratio bar diagram, the traffic ratio bar diagram being displayed at a position associated with the application identifier.

Alternatively, outputting the correspondence relationship between the application identifier of the background application and the amount of network traffic corresponding to the background application may include: calculating a summation of a plurality of amounts of network traffic consumed by a plurality of background applications in order to acquire a total amount of network traffic; calculating a ratio of each amount of network traffic consumed by respective background applications to the total amount of network traffic in order to acquire a second ratio corresponding to each of the background applications; and outputting a second correspondence relationship between the application identifier of each background application and the second ratio corresponding to the background application.

Alternatively, the method further including: receiving a permission switch command for the background application; acquiring permission for the background application to access a mobile network based on the permission switch command; and switching the permission to access denied if the permission is access allowed and switching the permission to access allowed if the permission is access denied.

Alternatively, receiving the permission switch command for the background applications may include: detecting a track of a sliding operation on the application identifier of the background application through a touch screen; determining that the permission switch command for the background application is received if the track of the sliding operation matches a preset sliding track.

Alternatively, receiving the permission switch command for the background application may include: detecting a number of clicks on application identifier of the background application through a touch screen; determining the permission switch command for the background application is received if the number of clicks matches a preset number.

According to a second aspect of the present disclosure, an apparatus for network traffic monitoring is provided, comprising: a network traffic acquisition module configured to receive a traffic monitoring command to get an amount of network traffic consumed by a background application, wherein the background application is an application program running in background; and a correspondence relationship output module configured to output a correspondence relationship between an application identifier of the background application and the amount of network traffic corresponding to the background application.

Alternatively, the traffic monitoring command is a command for starting a task menu, wherein the task menu is a menu showing an application identifier of a background application, and wherein the correspondence relationship output module may include: an output submodule configured to output, on the task menu, the correspondence relationship between the application identifier of the background application and the amount of network traffic corresponding to the background application.

Alternatively, the correspondence relationship output module may include: a traffic selection module configured to select, from a plurality of amounts of network traffic for a plurality of background applications, a maximum amount of network traffic; a first ratio calculation module configured to calculate a ratio of each amount of network traffic consumed by respective background applications to the maximum amount of network traffic in order to acquire a first ratio corresponding to each of the background applications; and a first correspondence relationship output submodule configured to output a first correspondence relationship between the application identifier of each background application and the first ratio corresponding to the background application.

Alternatively, the first correspondence relationship output submodule may include: a first display submodule configured to display the application identifier of each background application and the first ratio corresponding to the background application, the first ratio being displayed at a position associated with the application identifier.

Alternatively, the first correspondence relationship output submodule may include: a bar diagram generation submodule configured to generate a traffic ratio bar diagram for each background application based on the first ratio corresponding to the background application; and a second display submodule configured to display the application identifier of the background application and the traffic ratio bar diagram, the traffic ratio bar diagram being displayed at a position associated with the application identifier.

Alternatively, the correspondence relationship output module may include: a traffic determination submodule configured to calculate a summation of a plurality of amounts of network traffic consumed by a plurality of background applications in order to acquire a total amount of network traffic; a second ratio calculation submodule configured to calculate a ratio of each amount of network traffic consumed by respective background application to the total amount of network traffic in order to acquire a second ratio corresponding to each of the background applications; and a second correspondence relationship output submodule configured to output a second correspondence relationship between the application identifier of each background application and the second ratio corresponding to the background application.

Alternatively, the apparatus further may include: a command reception module configured to receive a permission switch command for the background application; a permission acquisition module configured to acquire permission for the background application to access a mobile network based on the permission switch command; and a permission switch module configured to switch the permission to access denied if the permission is access allowed and switching the permission to access allowed if the permission is access denied.

Alternatively, the command reception module may include: a track detection submodule configured to detect a track of a sliding operation on the application identifier of the background application through a touch screen; a first command determination submodule configured to determine that the permission switch command for the background application is received if the track of the sliding operation matches a preset sliding track.

Alternatively, the command reception module may include: a click detection submodule configured to detect a number of clicks on application identifier of the background application through a touch screen; a second command determination submodule configured to determine the permission switch command for the background application is received if the number of clicks matches a preset number.

According to a third aspect of the present disclosure, an apparatus for network traffic monitoring is provided, including: a processor; a memory for storing processor-executable instructions; wherein the processor is configured to: receive a traffic monitoring command to get an amount of network traffic consumed by a background application, wherein the background application is an application program running in background; output a correspondence relationship between an application identifier of the background application and the amount of network traffic corresponding to the background application.

The technical solution disclosed in the embodiments may provide the following advantages:
In the present disclosure, by receiving the traffic monitoring command to get the amount of network traffic consumed by the background application and outputting the correspondence relationship between the application identifier of the background application and the amount of network traffic corresponding to the background application, background applications are targeted as the objects among which to locate a target application. In this case the amount of network traffic consumed by the background application may be determined directly according to the correspondence relationship, thereby the efficiency may be improved.

In the present disclosure, upon reception of the command for starting a task menu, the amount of network traffic consumed by the background application may be acquired and the correspondence relationship between the application identifier of the background application and the amount of network traffic corresponding to the background application may be output on the task menu, therefore the user may be able to check the network traffic consumption of the background application while looking over the background application, thus convenience may be brought to the user while at the same time the efficiency to check the network traffic consumption may be improved.

In the present disclosure, by calculating a ratio of each amount of network traffic consumed by respective background application to the maximum amount of network traffic in order to acquire a first ratio corresponding to each of the background applications, and then outputting a first correspondence relationship between the application identifier of the background application and the first ratio corresponding to the background application, the amount of network traffic consumed by the background application may be indicated with a value of a ratio. The user may determine intuitively the proportion of the amount of network traffic consumed by the current application to the maximum amount of network traffic based on the value of the ratio, thereby convenience may be brought to the user.

In the present disclosure, the correspondence relationship between the application identifier and the first ratio is directly displayed, and the user may determine the proportion of the amount of network traffic consumed by the current application to the maximum amount of network traffic based on the correspondence relationship, thereby the readability of the relationship between the amount of network traffic consumed by the background application and the maximum amount of network traffic may be improved and convenience may be brought to the user.

In the present disclosure, the correspondence relationship between the application identifier and the traffic ratio bar diagram is directly displayed, and the user may determine the proportion of the amount of network traffic consumed by the current application to the maximum amount of network traffic based on the correspondence relationship, thereby the readability of the relationship between the amount of network traffic consumed by the background application and the maximum amount of network traffic may be improved and convenience may be brought to the user.

In the present disclosure, the amount of network traffic consumed by the background application may be divided by the total amount of network traffic to acquire a second ratio, so that a second correspondence relationship between the application identifier of the background application and the second ratio corresponding to the background application may be output. The user may determine intuitively the proportion of the amount of network traffic consumed by the application to the total amount of network traffic based on the value of the ratio, thereby the efficiency for determining the relationship between the amount of network traffic consumed by the background application and the total amount of network traffic may be improved and convenience may be brought to the user.

In the present disclosure, if a permission switch command for the background application is received after the correspondence relationship between the application identifier of the background application and the amount of network traffic corresponding to the background application is output, then the permission for the background application to access mobile network may be acquired based on the permission switch command and the permission may be switched, thereby the control over the access permission to the background applications may be realized and the efficiency to control the amount of the network traffic consumed by the background application may be improved.

In the present disclosure, whether the permission switch command for the background application is received may be determined by detecting whether the track of the sliding operation matches a preset sliding track. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

In the present disclosure, whether the permission switch command for the background application is received may be determined by detecting whether the number of clicks matches a preset number. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

It is to be understood that the above general description and the following detailed description are merely for the purpose of illustration and explanation, and are not intended to limit the scope of the protection of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a schematic diagram illustrating a method for checking the amount of network traffic consumed by an application program in prior art.
Fig. 1B is a flow diagram illustrating a method for traffic monitoring according to an exemplary embodiment.
Fig. 1C is a schematic diagram illustrating an output correspondence relationship according to an exemplary embodiment.
Fig. 1D is a schematic diagram illustrating another output correspondence relationship according to an exemplary embodiment.
Fig. 2 is a flow diagram illustrating another method for traffic monitoring according to an exemplary embodiment.
Fig. 3 is a block diagram illustrating an apparatus for traffic monitoring according to an exemplary embodiment.
Fig. 4 is a block diagram illustrating another apparatus for traffic monitoring according to an exemplary embodiment.
Fig. 5 is a block diagram illustrating another apparatus for traffic monitoring according to an exemplary embodiment.
Fig. 6 is a block diagram illustrating another apparatus for traffic monitoring according to an exemplary embodiment.
Fig. 7 is a block diagram illustrating another apparatus for traffic monitoring according to an exemplary embodiment.
Fig. 8 is a block diagram illustrating another apparatus for traffic monitoring according to an exemplary embodiment.
Fig. 9 is a block diagram illustrating another apparatus for traffic monitoring according to an exemplary embodiment.
Fig. 10 is a block diagram illustrating another apparatus for traffic monitoring according to an exemplary embodiment.
Fig. 11 is a block diagram illustrating another apparatus for traffic monitoring according to an exemplary embodiment.
Fig. 12 is a structure block diagram illustrating a device used for traffic monitoring according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

The terms used in present disclosure are merely for describing the particular embodiments rather than limiting the present disclosure. Terms, such as "a", "an", "said", and "the", as used in singular form in present disclosure and appended claims include plural form, unless otherwise represent other meaning clearly in the context. It also should be understood that the term "and/or" used herein indicates and comprises any or all of possible combinations of one or more associated items which have been listed.

It should be understood that the terms "first," "second," and "third," may be used to describe various information, but it not limit to these terms. These terms are only used to separate the same type of the information from each other. For example, the first information may also be referred as the second information without departing from the scope of the present disclosure, similarly the second information may also be referred to as the first information. The word "if" as used herein may be interpreted as "when" or "while" or "respond to determination" depending on the context.

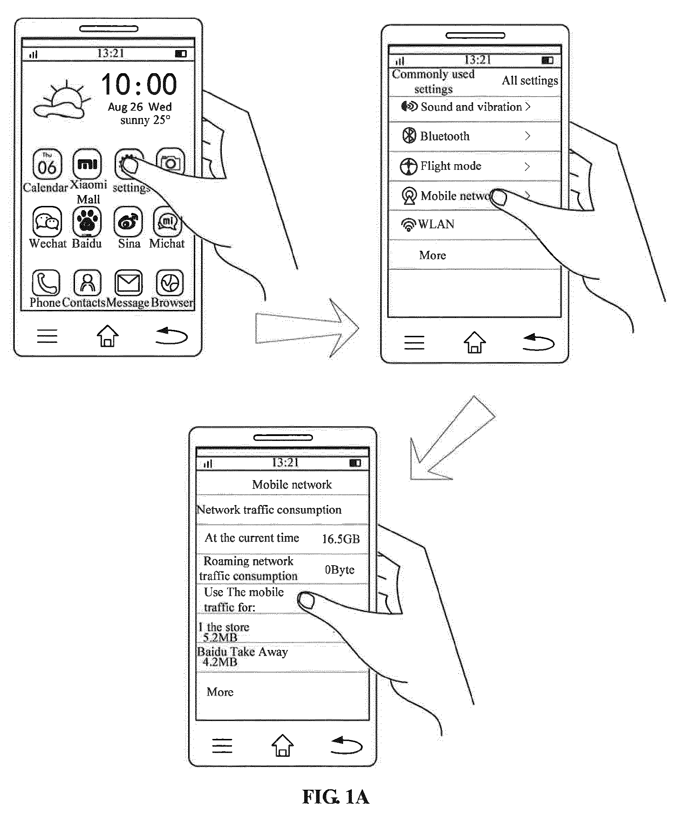

Fig. 1A is a schematic diagram illustrating a method for checking an amount of network traffic consumed by an application in prior art. A user may have to perform the following operations to check the amount of network traffic consumed by the background application: locating, from various icons on a desktop of a cell phone, the icon for the application "settings"; clicking on the icon; locating, from the configuration interface for the application "settings", the button for the "mobile network" option (which varies with different operating systems); and checking the amount of network traffic consumed by the application in the interface for the "mobile network" option. However, checking the network traffic consumption in this manner is complicated in operation, and at the same time is inefficiency, since network traffic consumptions of all applications are recorded and it needs to locate, among all applications, a target application. Traffic monitoring applications such as Network Assistant have already been installed in some terminal devices to acquire statistics for the amounts of network traffic consumed by various applications. Since the network traffic consumptions of all applications are recorded in the Network Assistant, the user may have to locate, among traffic consumptions of all applications, traffic consumption of a target application, resulting in low efficiency.

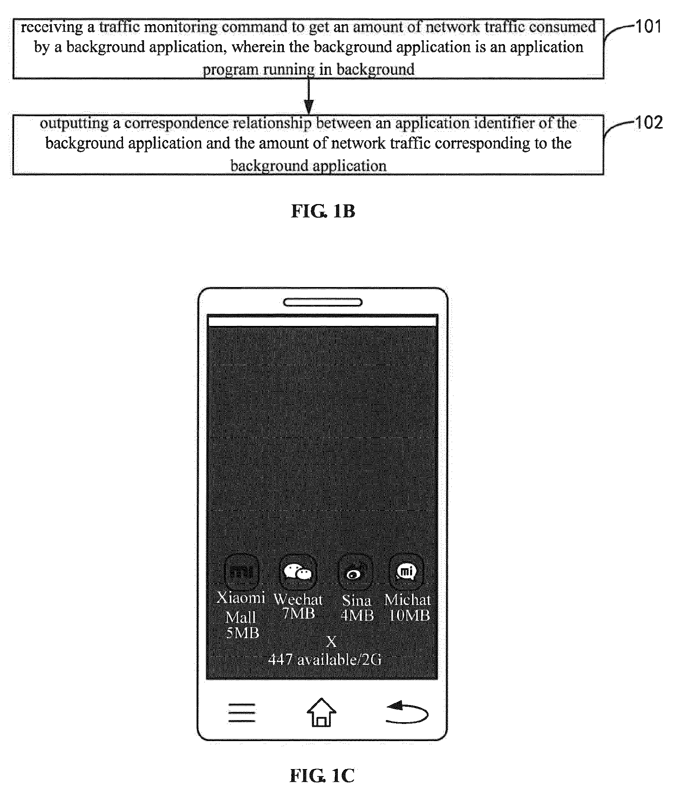

The present disclosure narrows the scope among which to locate a target application in order to improve the efficiency. Given the reason that users are generally more concerned about the applications that are being used, applications that are running in the background are targeted as the objects among which to locate a target application, thereby the efficiency may be improved. Fig. 1B is a flow diagram illustrating a method for traffic monitoring according to an exemplary embodiment. The method can be used in a terminal device and include steps 101 to 102:
at step 101, receiving a traffic monitoring command to get an amount of network traffic consumed by a background application, wherein the background application is an application program running in background;
at step 102, outputting a correspondence relationship between an application identifier of the background application and the amount of network traffic corresponding to the background application.

Terminal devices involved in the present disclosure may include smart terminal devices, such as smart phones and tablet computers, etc.

Wherein the traffic monitoring command is a trigger command that triggers the implementation of steps 101 to 102. The traffic monitoring command may be a new trigger command in the terminal device. For example, the generation of the traffic monitoring command may be triggered by the combination of one or more buttons originally undefined. In some embodiments, the traffic monitoring command may be generated by pressing the volume up button and the home button simultaneously to trigger the implementation of steps 101 to 102, assuming the volume up button and the home button have no extra functions. In other embodiments, the traffic monitoring command may be triggered by a certain button, for example, an application installed in the terminal device. The traffic monitoring command may be triggered by triggering the icon of the application, thus triggering the implementation of steps 101 to 102.

The traffic monitoring command may also be a trigger command already existed in the terminal device. The traffic monitoring function may be improved by expanding the existing trigger command. For example, in an optional implementation, the traffic monitoring command may be a command for starting a task menu. That is to say, the following operations may be performed upon reception of the command for starting a task menu: acquiring an amount of network traffic consumed by a background application and outputting, on the task menu, the correspondence relationship between the application identifier of the background application and the amount of network traffic corresponding to the background application.

Wherein the task menu is a menu showing an application identifier of the background application. The application identifier may include an application icon, an application name and an application number. The generation of the command for starting a task menu in different operating systems may be triggered in different ways. For example, the generation of the command for starting a task menu may be triggered by double clicking the home button in IOS system, and then task menu may pop up; while in Android system, the generation of the command for starting a task menu may be triggered by clicking the menu button, and then the task menu may pop up. The user may click on the application icon shown in the task menu and slide the icon up to release, i.e. shut down, the corresponding background application. On the other hand, the user may click on the application icon shown in the task menu to switch the background application from running in the background to running in the foreground. In a Xiaomi cellphone, all background applications may be released by a single click on the "X" button below the application icons. Besides, the icon of the background application may be slid down to keep hold/release hold of the background application, wherein keeping hold of a background application means the background application is locked so that it will not be released even when the "X" button is clicked, and releasing hold of a background application means the background application is unlocked so that it will be released when the "X" button is clicked.

It can be seen from the above embodiments that in the present disclosure, upon reception of the command for starting a task menu, the amount of network traffic consumed by the background application may be acquired and the correspondence relationship between the application identifier of the background application and the amount of network traffic corresponding to the background application may be output on the task menu, therefore the user may be able to check the network traffic consumption of the background application while looking over the background application, thus convenience may be brought to the user and the efficiency to check the network traffic consumption may be improved.

With respect to the step 101, after the reception of the traffic monitoring command, the application that is running in the background (which is also referred to as background application) may be determined, and the amount of network traffic consumed by the background application may then be acquired. As an example, the amount of network traffic consumed by each background application may be determined based on the amount of network traffic received and transmitted through the traffic status interface, wherein the network traffic is the amount of data transmitted over the network. In an embodiment, since users generally are not concerned about the amount of network traffic consumed under a LAN network circumstance, the network traffic monitored in the present disclosure may be mobile network traffic which corresponds to networks such as 3G networks and 4G networks and the like.

With respect to the step 102, the application identifier may include an application icon, an application name and an application number. The application icon may be employed as the application identifier in order to improve the efficiency to identify the background application.

Wherein a correspondence relationship between the application identifier of the background application and the amount of network traffic corresponding to the background application is output, so that the user may determine the amount of network traffic consumed by the background application based on the correspondence relationship. Concerning the output form, if the generation of the traffic monitoring command is triggered by a new combination of buttons, a prompt window may pop up and display the correspondence relationship between the application identifier of the background application and the amount of network traffic corresponding the background application; and if the traffic monitoring command is a command for starting a task menu, the correspondence relationship between the application identifier of the background application and the amount of network traffic corresponding to the background application may be displayed on the interface for the task menu.

Wherein the output form may include an auditory form and a visual form. For example, the icon of a background application may be displayed and the amount of network traffic consumed by this background application may be indicated with voice prompt when the icon is double clicked, thus the output of the correspondence relationship between the application identifier of the background application and the amount of network traffic corresponding to the background application may be realized. In order for the network traffic consumption to be displayed in a more intuitive way, the correspondence relationship between the application identifier of the background application and the amount of network traffic corresponding to the background application may be output in a visual form. Several ways for outputting the correspondence relationship in a visual form are listed in the following.

In an alternative implementation, the amount of network traffic consumed by the background application may be displayed at an associated position with the background application. Wherein the associated position is a position associated with the application identifier, and the user may determine, based on the associated position, that an amount of network traffic is the amount of network traffic corresponding to the background application. For example, the associated position may be a position below, above the application identifier or on the left of the application identifier, etc. Fig. 1C is a schematic diagram illustrating an output correspondence relationship according to an exemplary embodiment. In the embodiment, the amount of network traffic consumed by the background application is displayed below the application identifier and the application name. The amount of network traffic consumed by the background application is displayed below the application identifier upon the reception of the command for starting a task menu.

In another alternative implementation, outputting the correspondence relationship between the application identifier of the background application and the amount of network traffic corresponding to the background application comprises: selecting, from a plurality of amounts of network traffic for a plurality of background applications, a maximum amount of network traffic; calculating a ratio of each amount of network traffic consumed by respective background applications to the maximum amount of network traffic in order to obtain a first ratio corresponding to each of the background applications; and outputting a first correspondence relationship between the application identifier of each background application and the first ratio corresponding to the background application.

In this implementation, since each background application corresponds to an amount of network traffic consumption, the maximum amount of network traffic may then be selected from all of the amounts of network traffic and taken as a baseline for comparison to calculate a ratio of each amount of network traffic consumed by respective background application to the maximum amount of network traffic in order to acquire a first ratio corresponding to each of the background applications, following that a first correspondence relationship between the application identifier of the background application and the first ratio corresponding to the background application may be output, thereby the amount of network traffic consumed by the background application may be indicated by the value of the first ratio. The user may determine intuitively the proportion of the amount of network traffic consumed by the current application to the maximum amount of network traffic based on the value of the first ratio, thus the readability may be improved and convenience may be brought to the user.

Wherein if the traffic monitoring command is a command for starting a task menu, the first correspondence relationship between the application identifier of the background application and the first ratio corresponding to the background application may be output on the task menu.

As a possible output form, the amount of network traffic consumed by the background application and the first ratio corresponding to the background application may be displayed, wherein the first ratio being display at an associated position with the background application. The associated position is a position associated with the application identifier, and the user may determine, based on the associated position, that the first ratio is the ratio corresponding to the background application. For example, the associated position may be a position below, above the application identifier or on the left or right of the application identifier, etc.

In this implementation the first correspondence relationship between the application identifier and the first ratio is directly displayed, and the user may determine the proportion of the amount of network traffic consumed by the current application to the maximum amount of network traffic based on the first correspondence relationship, thereby the readability of the relationship between the amount of network traffic consumed by the background application and the maximum amount of network traffic may be improved and convenience may be brought to the user.

Wherein if the traffic monitoring command is a command for starting a task menu, the application identifier of the background application and the first ratio corresponding to the background application may be displayed on the task menu, wherein the first ratio being display at an associated position with the background application.

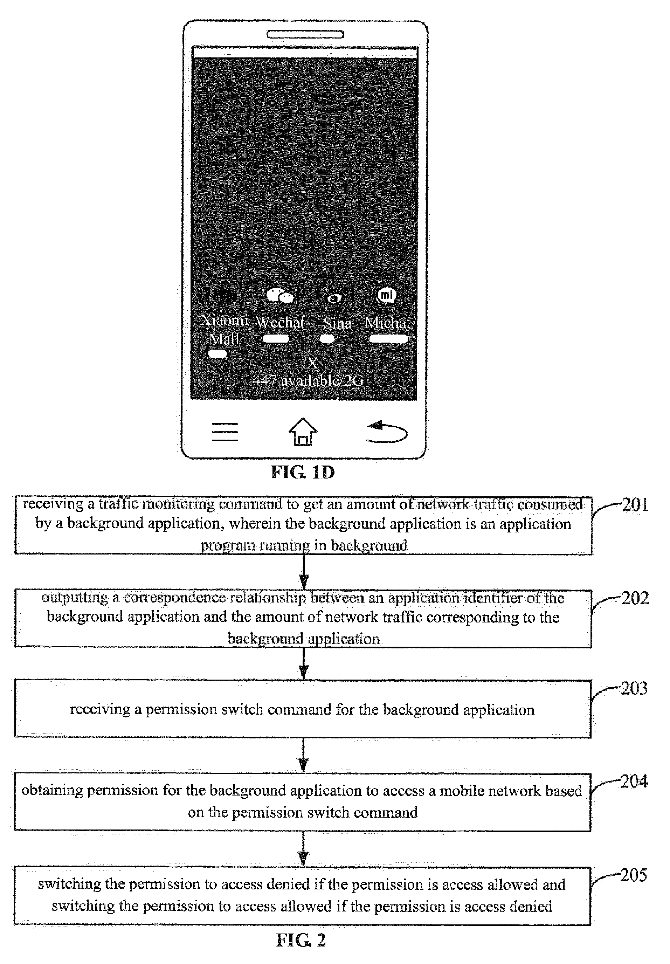

As another output form, a first traffic ratio bar diagram for each background application may be generated based on the first ratio corresponding to the background application, and the application identifier of the background application and the first traffic ratio bar diagram may be displayed, wherein the first traffic ratio bar diagram may be displayed at an associated position with the application identifier. The associated position is a position associated with the application identifier, and the user may determine, based on the associated position, that a traffic ratio bar diagram is the first traffic ratio bar diagram corresponding to the background application. For example, the associated position may be a position below, above the application identifier or on the left of the application identifiers, etc. Fig. 1D is a schematic diagram illustrating another output correspondence relationship according to an exemplary embodiment. In this schematic diagram, the amount of network traffic consumed by the background application is divided the maximum amount of network traffic upon the reception of the command for starting a task menu, so that a first ratio corresponding to the background application may be acquired, a first traffic ratio bar diagram may be generated according to the first ratio corresponding to the background application, and the first traffic ratio bar diagram may be displayed below the application identifier of the background application.

In this implementation the first correspondence relationship between the application identifier and the first traffic ratio bar diagram is directly displayed, and the user may determine the proportion of the amount of network traffic consumed by the current application to the maximum amount of network traffic based on the first correspondence relationship, thereby the readability of the relationship between the amount of network traffic consumed by the background application and the maximum amount of network traffic may be improved and convenience may be brought to the user.

In another alternative implementation, outputting the correspondence relationship between the application identifier of the background application and the amount of network traffic corresponding to the background application comprises: calculating a summation of a plurality of amounts of network traffic consumed by a plurality of background applications in order to acquire a total amount of network traffic; calculating a ratio of the amount of network traffic consumed by respective background applications to the total amount of network traffic in order to acquire a second ratio corresponding to each of the background applications; and outputting a second correspondence relationship between the application identifier of each background application and the second ratio corresponding to the background application.

Wherein when outputting the second correspondence relationship, the application identifier of the background application and the second ratio corresponding to the background application may be displayed. As another example, a second traffic ratio bar diagram may be generated when outputting the second correspondence relationship, so that the application identifier of the background application and the second traffic ratio bar diagram may be displayed.

In this embodiment, the amount of network traffic consumed by the background application may be divided by the total amount of network traffic to acquire the second ratio, so that the second correspondence relationship between the application identifier of the background application and the second ratio corresponding to the background application may be output. The user may determine intuitively the proportion of the amount of network traffic consumed by the application to the total amount of network traffic based on the value of the ratio, thereby the efficiency for determining the relationship between the amount of network traffic consumed by the background application and the total amount of network traffic may be improved and convenience may be brought to the user.

In another alternative implementation, outputting the correspondence relationship between the application identifier of the background application and the amount of network traffic corresponding to the background application comprises: calculating an overall amount of network traffic consumed by all applications; calculating a ratio of the amount of network traffic consumed by each background application to the overall amount of network traffic in order to acquire a third ratio corresponding to each of the background applications; and outputting a third correspondence relationship between the application identifier of each background application and the third ratio corresponding to the background application. Wherein all applications may be all applications installed locally in the terminal device.

In this embodiment, the amount of network traffic consumed by the background application may be divided by the overall amount of network traffic to acquire a third ratio, so that a third correspondence relationship between the application identifier of the background application and the third ratio corresponding to the background application may be output. The user may determine intuitively the proportion of the amount of network traffic consumed by the application to the overall amount of network traffic based on the value of the ratio, thereby convenience may be brought to the user.

It is to be understood that only several correspondence relationships between the application identifier of the background application and the amount of network traffic consumed by respective background application are listed in the above description, and other correspondence relationships, which are not listed herein due to limited space, are intended to be included in the scope of the disclosure.

Fig. 2 is a flow diagram illustrating a method for traffic monitoring according to an exemplary embodiment. The method may be used in a terminal device, and may include the following steps 201 to 205:
at step 201, receiving a traffic monitoring command to get an amount of network traffic consumed by a background application, wherein the background application is an application program running in background;
at step 202, outputting a correspondence relationship between an application identifier of the background application and the amount of network traffic corresponding to the background application;
at step 203, receiving a permission switch command for the background application;
at step 204, acquiring permission for the background application to access a mobile network based on the permission switch command; and
at step 205, switching the permission to access denied if the permission is access allowed and switching the permission to access allowed if the permission is access denied.

Wherein steps 201 and 202 are similar to steps 101 and 102 illustrated with respect to Fig. 1B and are not described again for simplicity. The permission for the background application to access a mobile network may be permission for the background application to connect to a server via the mobile network. The background application may be connected to the network via the mobile network if the permission is access allowed, and the background application may not be connected to the network through the mobile network if the permission is access denied.

Permission switch command for the background application may be received after the correspondence relationship between the application identifier of the background application and the amount of network traffic corresponding to the background application is output.

In an alternative implementation, a track of a sliding operation on the application identifier of the background application through a touch screen may be detected, and the reception of the permission switch command for the background application may be determined if the track of the sliding operation matches a preset sliding track.

Wherein the preset sliding track may be a sliding track that is not defined with a function originally. For example, the preset sliding track may be set as a track of sliding down if there is no trigger event corresponding to the track of sliding down in the task menu. If the trigger event corresponding to the track of sliding down in the task menu is to keep hold/release hold of the background application, the trigger track for the trigger event may be changed to sliding down first and then sliding toward the left, and the preset sliding track may be set as sliding down first and then sliding toward the right. Furthermore, the preset sliding track may also be other track, for example, a circle track, a triangle track, a waggle track and the like.

In the implementation, whether the permission switch command for the background application is received may be determined by detecting whether the track of the sliding operation matches a preset sliding track. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

In an alternative implementation, a number of clicks on application identifier of the background application through a touch screen may be detected, and the reception of the permission switch command for the background application may be determined if the number of clicks matches a preset number, wherein the preset number may be twice or more than twice.

In the implementation, whether the permission switch command for the background application is received may be determined by detecting whether the number of clicks matches a preset number. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

It is to be understood that only a few of embodiments about the determination of the reception of the permission switch command are described above, however, other ways may be employed to determine the reception of the permission switch command, which are not listed herein for simplicity.

The technical features according to abovementioned embodiments may be arbitrarily combined, which are not listed herein for simplicity, as long as the combinations bring about no conflict or contradiction. It is to be understood that the combinations of the technical features according to abovementioned embodiments fall within the scope of the present disclosure.

In correspondence to the method for traffic monitoring, a device for traffic monitoring and an example embodiment of a terminal device in which the device for traffic monitoring is deployed are also provided in the disclosure.

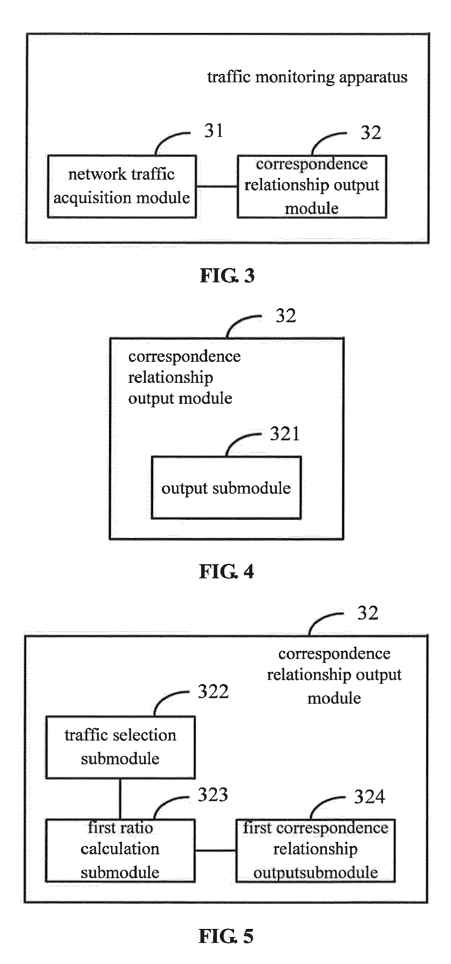

Fig. 3 is a block diagram illustrating an apparatus for traffic monitoring according to an exemplary embodiment, the apparatus may include a network traffic acquisition module 31 and a correspondence relationship output module 32.

Wherein, the network traffic acquisition module 31 may be configured to receive a traffic monitoring command to get an amount of network traffic consumed by a background application, wherein the background application is an application program running in background.

The correspondence relationship output module 32 may be configured to output a correspondence relationship between an application identifier of the background application and the amount of network traffic corresponding to the background application.

It can be seen from the above embodiment that by receiving the traffic monitoring command to get the amount of network traffic consumed by the background application and outputting the correspondence relationship between the application identifier of the background application and the amount of network traffic corresponding to the background application, background applications are targeted as the objects among which to locate a target application. In this case the amount of network traffic consumed by the background application may be determined directly according to the correspondence relationship, thereby the efficiency may be improved.

Fig. 4 is a block diagram illustrating another apparatus for traffic monitoring according to an exemplary embodiment. Further to the embodiment illustrated in Fig. 3, the traffic monitoring command is a command for starting a task menu, wherein the task menu is a menu showing an application identifier of a background application, and wherein the correspondence relationship output module 32 may include an output submodule 321.

Wherein the output submodule 321 may be configured to output, on the task menu, the correspondence relationship between the application identifier of the background application and the amount of network traffic corresponding to the background application.

It can be seen from the above embodiments that upon reception of the command for starting a task menu, the amount of network traffic consumed by the background application may be acquired and the correspondence relationship between the application identifier of the background application and the amount of network traffic corresponding to the background application may be output on the task menu, therefore the user may be able to check the network traffic consumption of the background application while looking over the background application, hence convenience may be brought to the user while at the same time the efficiency to check the network traffic consumption may be improved.

Fig. 5 is a block diagram illustrating another apparatus for traffic monitoring according to an exemplary embodiment. Further to the embodiment illustrated in Fig. 3, the correspondence relationship output module 32 may include a traffic selection submodule 322, a first ratio calculation submodule 323 and a first correspondence relationship output submodule 324.

Wherein the traffic selection submodule 322 may be configured to select, from a plurality of amounts of network traffic for a plurality of background applications, a maximum amount of network traffic.

The first ratio calculation submodule 323 may be configured to calculate a ratio of each amount of network traffic consumed by respective background applications to the maximum amount of network traffic in order to acquire a first ratio corresponding to each of the background applications.

The first correspondence relationship output submodule 324 may be configured to output a first correspondence relationship between the application identifier of each background application and the first ratio corresponding to the background application.

It can be seen from the above embodiments that by calculating a ratio of each amount of network traffic consumed by respective background application to the maximum amount of network traffic in order to acquire a first ratio corresponding to each of the background applications, and then outputting a first correspondence relationship between the application identifier of the background application and the first ratio corresponding to the background application, the amount of network traffic consumed by the background application may be indicated with a value of a ratio. The user may determine intuitively the proportion of the amount of network traffic consumed by the current application to the maximum amount of network traffic based on the value of the ratio, thereby convenience may be brought to the user.

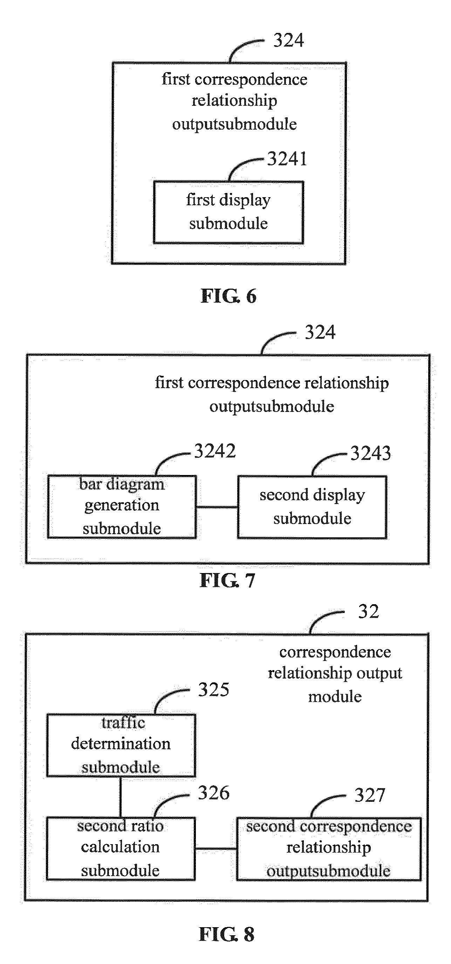

Fig. 6 is a block diagram illustrating another apparatus for traffic monitoring according to an exemplary embodiment. Further to the embodiment illustrated in Fig. 5, the first correspondence relationship output submodule 324 may include a first display submodule 3241.

Wherein the first display submodule 3241 may be configured to display the application identifier of each background application and the first ratio corresponding to the background application, the first ratio being displayed at a position associated with the application identifier.

It can be seen from the above embodiments that the correspondence relationship between the application identifier and the first ratio is directly displayed, and the user may determine the proportion of the amount of network traffic consumed by the current application to the maximum amount of network traffic based on the correspondence relationship, thereby the readability of the relationship between the amount of network traffic consumed by the background application and the maximum amount of network traffic may be improved and convenience may be brought to the user.

Fig. 7 is a block diagram illustrating another apparatus for traffic monitoring according to an exemplary embodiment. Further to the embodiment illustrated in Fig. 5, the first correspondence relationship output submodule 324 may include a bar diagram generation submodule 3242 and a second display submodule 3243.

Wherein the bar diagram generation submodule 3242 may be configured to generate a traffic ratio bar diagram for each background application based on the first ratio corresponding to the background application.

The second display submodule 3243 may be configured to display the application identifier of the background application and the traffic ratio bar diagram, the traffic ratio bar diagram being displayed at a position associated with the application identifier.

It can be seen from the above embodiments that the correspondence relationship between the application identifier and the traffic ratio bar diagram is directly displayed, and the user may determine the proportion of the amount of network traffic consumed by the current application to the maximum amount of network traffic based on the correspondence relationship, thereby the readability of the relationship between the amount of network traffic consumed by the background application and the maximum amount of network traffic may be improved and convenience may be brought to the user.

Fig. 8 is a block diagram illustrating another device for traffic monitoring according to an exemplary embodiment. Further to the embodiment illustrated in Fig. 3, the correspondence relationship output module 32 may include a traffic determination submodule 325, a second ratio calculation submodule 326 and a second correspondence relationship output submodule 327.

Wherein the traffic determination submodule 325 may be configured to calculate a summation of a plurality of amounts of network traffic consumed by a plurality of background applications in order to acquire a total amount of network traffic.

The second ratio calculation submodule 326 may be configured to calculate a ratio of each amount of network traffic consumed by respective background application to the total amount of network traffic in order to acquire a second ratio corresponding to each of the background applications.

The second correspondence relationship output submodule may be configured to output a second correspondence relationship between the application identifier of each background application and the second ratio corresponding to the background application.

It can be seen from the above embodiments that the amount of network traffic consumed by the background application may be divided by the total amount of network traffic to acquire a second ratio, so that a second correspondence relationship between the application identifier of the background application and the second ratio corresponding to the background application may be output. The user may determine intuitively the proportion of the amount of network traffic consumed by the application to the total amount of network traffic based on the value of the ratio, thereby the efficiency for determining the relationship between the amount of network traffic consumed by the background application and the total amount of network traffic may be improved and convenience may be brought to the user.

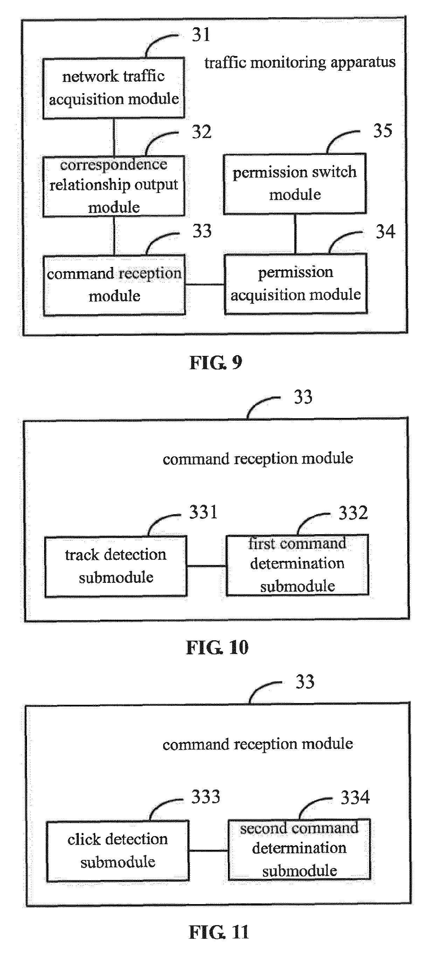

Fig. 9 is a block diagram illustrating another apparatus for traffic monitoring according to an exemplary embodiment. Further to any of the embodiment illustrated in Fig. 3 to Fig. 8, the apparatus may include a command reception module 33, a permission acquisition module 34 and a permission switch module 35.

Wherein command reception module 33 may be configured to receive a permission switch command for the background application.

The permission acquisition module 34 may be configured to acquire permission for the background application to access a mobile network based on the permission switch command.

The permission switch module 35 may be configured to switch the permission to access denied if the permission is access allowed and switching the permission to access allowed if the permission is access denied.

It can be seen from the above embodiments that if a permission switch command for the background application is received after the correspondence relationship between the application identifier of the background application and the amount of network traffic corresponding to the background application is output, then the permission for the background application to access mobile network may be acquired based on the permission switch command and the permission may be switched, thereby the control over the access permission to the background applications may be realized and the efficiency to control the amount of the network traffic consumed by the background application may be improved.

Fig. 10 is a block diagram illustrating another apparatus for traffic monitoring according to an exemplary embodiment. Further to the embodiment illustrated in Fig. 9, the command reception module 33 may include a track detection submodule 331 and a first command determination submodule 332.

Wherein the track detection submodule 331 may be configured to detect a track of a sliding operation on the application identifier of the background application through a touch screen.

The first command determination submodule 332 may be configured to determine that the permission switch command for the background application is received if the track of the sliding operation matches a preset sliding track.

It can be seen from the above embodiments that whether the permission switch command for the background application is received may be determined by detecting whether the track of the sliding operation matches a preset sliding track. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

Fig. 11 is a block diagram illustrating another device for traffic monitoring according to an exemplary embodiment. Further to the embodiment illustrated in Fig. 9, the command reception module 33 may include a click detection submodule 333 and a second command determination submodule 334.

Wherein the click detection submodule 333 may be configured to detect a number of clicks on application identifier of the background application through a touch screen.

The second command determination submodule 334 may be configured to determine the permission switch command for the background application is received if the number of clicks matches a preset number.

It can be seen from the above embodiments that whether the permission switch command for the background application is received may be determined by detecting whether the number of clicks matches a preset number. Upon the reception of the permission switch command, the permission for the background application to access a mobile network may be acquired based on the permission switch command and the access permission may be switched, thereby the control over the access permission to the background applications may be realized and the efficiency to control the amount of the network traffic consumed by the background application may be improved.

Accordingly, a device for traffic monitoring is also provided in the disclosure, the apparatus may include a processor and a memory for storing processor-executable instructions, wherein the processor is configured to: receive a traffic monitoring command to get an amount of network traffic consumed by a background application, wherein the background application is an application program running in background; and output a correspondence relationship between an application identifier of the background application and the amount of network traffic corresponding to the background application.

Description of a corresponding step of a method may be referred to for details of the process in which functions and effects of respective modules are realized.

For embodiments of a device, since it substantially corresponds to embodiments of a method, description of a certain part of the method may be referred to for description of a relevant part of the device. The above-described embodiments of a device are for illustrative purposes only, wherein elements described as separate components may or may not be physically separated, and components illustrated as elements may or may not be physical elements (i.e., these components may be located in the same place, or be distributed in several network elements). Part or all of the modules may be selected to realize the purposes of the scheme of this disclosure according to actual needs. Those of ordinary skill in the art may be able to understand and practice the scheme without creative efforts.

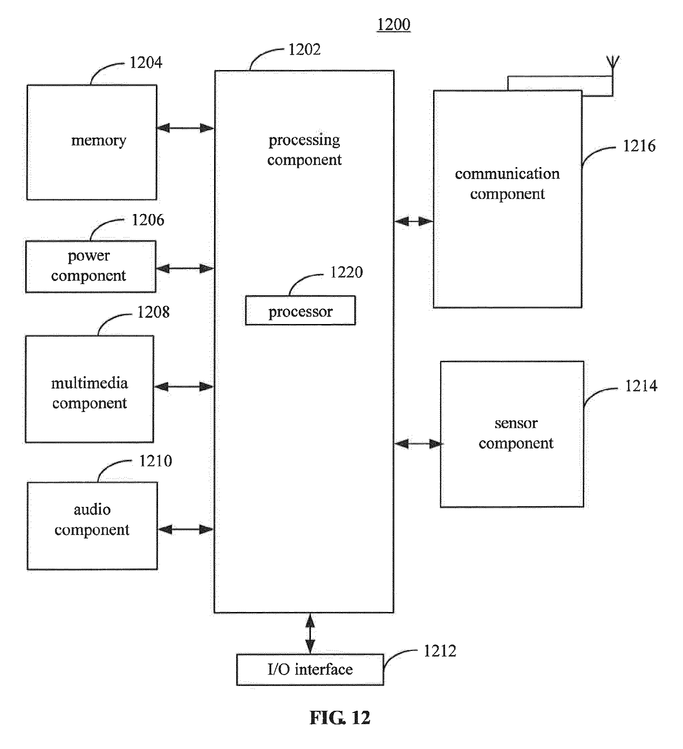

Fig. 12 is a structure block diagram illustrating a device for traffic monitoring according to an exemplary embodiment. For example, the device 1200 may be a mobile phone, a computer, a digital broadcast terminal device, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

Wherein the apparatus 1200 may be used to implement a method for traffic monitoring if the instructions stored in the storage medium is executed by the processor, the method may include: receiving a traffic monitoring command to get an amount of network traffic consumed by a background application, wherein the background application is an application program running in background; and outputting a correspondence relationship between an application identifier of the background application and the amount of network traffic corresponding to the background application.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

The above description may be regarded as preferred embodiments of the disclosure only, and are not intended to limit the disclosure. All modifications, equivalent substitutions, and improvements that fall within the principles of the disclosure should be included in the scope of protection of this disclosure.

## Claims

1. A method for network traffic monitoring, comprising:
receiving (101) a traffic monitoring command to get an amount of network traffic consumed by a background application, wherein the background application is an application program running in background; and
outputting (102) a correspondence relationship between an application identifier of the background application and the amount of network traffic corresponding to the background application.

2. The method according to claim 1, wherein the traffic monitoring command is a command for starting a task menu, wherein the task menu is a menu showing an application identifier of a background application, and wherein outputting the correspondence relationship between the application identifier of the background application and the amount of network traffic corresponding to the background application comprises:
outputting, on the task menu, the correspondence relationship between the application identifier of the background application and the amount of network traffic corresponding to the background application.

3. The method according to claim 1, wherein outputting the correspondence relationship between the application identifier of the background application and the amount of network traffic corresponding to the background application comprises:
selecting, from a plurality of amounts of network traffic for a plurality of background applications, a maximum amount of network traffic;
calculating a ratio of each amount of network traffic consumed by respective background application to the maximum amount of network traffic in order to acquire a first ratio corresponding to each of the background applications; and
outputting a first correspondence relationship between the application identifier of each background application and the first ratio corresponding to the background application.

4. The method according to claim 3, wherein outputting the first correspondence relationship between the application identifier of each background application and the first ratio corresponding to the background application comprises:
displaying the application identifier of each background application and the first ratio corresponding to the background application, the first ratio being displayed at a position associated with the application identifier; or
generating a traffic ratio bar diagram for each background application based on the first ratio corresponding to the background application, and displaying the application identifier of the background application and the traffic ratio bar diagram, the traffic ratio bar diagram being displayed at a position associated with the application identifier.

5. The method according to claim 1, wherein outputting the correspondence relationship between the application identifier of the background application and the amount of network traffic corresponding to the background application comprises:
calculating a summation of a plurality of amounts of network traffic consumed by a plurality of background applications in order to acquire a total amount of network traffic;
calculating a ratio of each amount of network traffic consumed by respective background application to the total amount of network traffic in order to acquire a second ratio corresponding to each of the background applications; and
outputting a second correspondence relationship between the application identifier of each background application and the second ratio corresponding to the background application.

6. The method according to any of claims 1-5, further comprising:
receiving (203) a permission switch command for the background application;
acquiring (204) permission for the background application to access a mobile network based on the permission switch command; and
switching (205) the permission to access denied if the permission is access allowed and switching the permission to access allowed if the permission is access denied.

7. An apparatus for network traffic monitoring, comprising:
a network traffic acquisition module (31) configured to receive a traffic monitoring command to get an amount of network traffic consumed by a background application, wherein the background application is an application program running in background; and
a correspondence relationship output module (32) configured to output a correspondence relationship between an application identifier of the background application and the amount of network traffic corresponding to the background application.

8. The apparatus according to claim 7, wherein the traffic monitoring command is a command for starting a task menu, wherein the task menu is a menu showing an application identifier of a background application, and wherein the correspondence relationship output module (32) comprises:
an output submodule (321) configured to output, on the task menu, the correspondence relationship between the application identifier of the background application and the amount of network traffic corresponding to the background application.

9. The apparatus according to claim 7, wherein the correspondence relationship output module (32) comprises:
a traffic selection submodule (322) configured to select, from a plurality of amounts of network traffic for a plurality of background applications, a maximum amount of network traffic;
a first ratio calculation submodule (323) configured to calculate a ratio of each amount of network traffic consumed by respective background applications to the maximum amount of network traffic in order to acquire a first ratio corresponding to each of the background applications; and
a first correspondence relationship output submodule (324) configured to output a first correspondence relationship between the application identifier of each background application and the first ratio corresponding to the background application.

10. The apparatus according to claim 9, wherein the first correspondence relationship output submodule (324) comprises:
a first display submodule (3241) configured to display the application identifier of each background application and the first ratio corresponding to the background application, the first ratio being displayed at a position associated with the application identifier.

11. The apparatus according to claim 9, wherein the first correspondence relationship output submodule (324) comprises:
a bar diagram generation submodule (3242) configured to generate a traffic ratio bar diagram for each background application based on the first ratio corresponding to the background application; and
a second display submodule (3243) configured to display the application identifier of the background application and the traffic ratio bar diagram, the traffic ratio bar diagram being displayed at a position associated with the application identifier.

12. The apparatus according to claim 7, wherein the correspondence relationship output module (32) comprises:
a traffic determination submodule (325) configured to calculate a summation of a plurality of amounts of network traffic consumed by a plurality of background applications in order to acquire a total amount of network traffic;
a second ratio calculation submodule (326) configured to calculate a ratio of each amount of network traffic consumed by respective background application to the total amount of network traffic in order to acquire a second ratio corresponding to each of the background applications; and
a second correspondence relationship output submodule (327) configured to output a second correspondence relationship between the application identifier of each background application and the second ratio corresponding to the background application.

13. The apparatus according to any of claims 7-12, further comprising:
a command reception module (33) configured to receive a permission switch command for the background application;
a permission acquisition module (34) configured to acquire permission for the background application to access a mobile network based on the permission switch command; and
a permission switch module (35) configured to switch the permission to access denied if the permission is access allowed and switching the permission to access allowed if the permission is access denied.

14. The apparatus according to claim 13, wherein the command reception module (33) comprises:
a track detection submodule (331) configured to detect a track of a sliding operation on the application identifier of the background application through a touch screen; and
a first command determination submodule (332) configured to determine that the permission switch command for the background application is received if the track of the sliding operation matches a preset sliding track.
a click detection submodule (333) configured to detect a number of clicks on application identifier of the background application through a touch screen; and
a second command determination submodule (334) configured to determine the permission switch command for the background application is received if the number of clicks matches a preset number.

15. A computer program, or recording medium readable by a computer, including instructions for executing the steps of a method for monitoring network traffic according to any one of claims 1 to 6 when said program is executed by a computer.
